# EUROPEAN PATENT APPLICATION

(11) **EP 2 412 619 A1**
(43) Date of publication of application: **01.02.2012**
(21) Application number: 11175927.0
(22) Date of filing: 29.07.2011
(51) Int. Cl.: B62K 21/12, B62K 11/14

(54) **Motorcycle handlebar**

(30) Priority: 30.07.2010 TW 099125353
(71) Applicant: Kwang Yang Motor Co., Ltd., Kaohsiung (TW)
(72) Inventor: Tsai, Feng-Chih, 830 Kaohsiung City (TW)
(74) Representative: Heine, Christian Klaus

(57) **Abstract**

A motorcycle handle (3) forms a part of a scooter type motorcycle. The motorcycle handle (3) includes a handle body (31) having a first connecting section (321), two first ascending sections (312) extending respectively and upwardly from two opposite ends of the first connecting section (311), and two grip sections (313) extending respectively and outwardly from top ends of the ascending sections (312) away from each other. The motorcycle handle (3) further includes: an outer housing (32), with which the handle body (31) is coated; a reinforcing member (33) having a shape corresponding to that of an assembly of the first connecting section (311) and the first ascending sections (312), the reinforcing member (33) being disposed on the handle body (31) and between the outer housing (32) and the handle body (31); and a plurality of connecting members (34) interconnecting fixedly the handle body (31) and the reinforcing member (33).

## Description

This invention relates to a motor handle, and more particularly to a handle of a scooter type motorcycle.

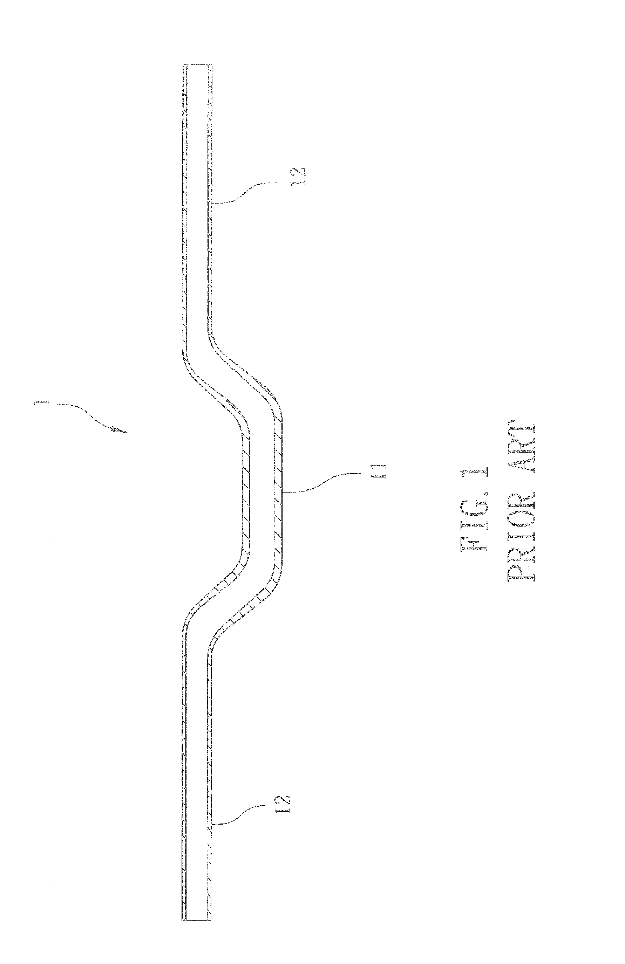

Typically, a motorcycle handle has a U or V-shaped middle portion. For example, referring to Fig. 1, a conventional motorcycle handle 1 has a generally U-shaped middle section 11 and two grip sections 12. To reinforce the handle 1, the wall thickness of the middle section 11 is greater than that of each of the grip sections 12, which results in difficulties in manufacture of the handle 1.

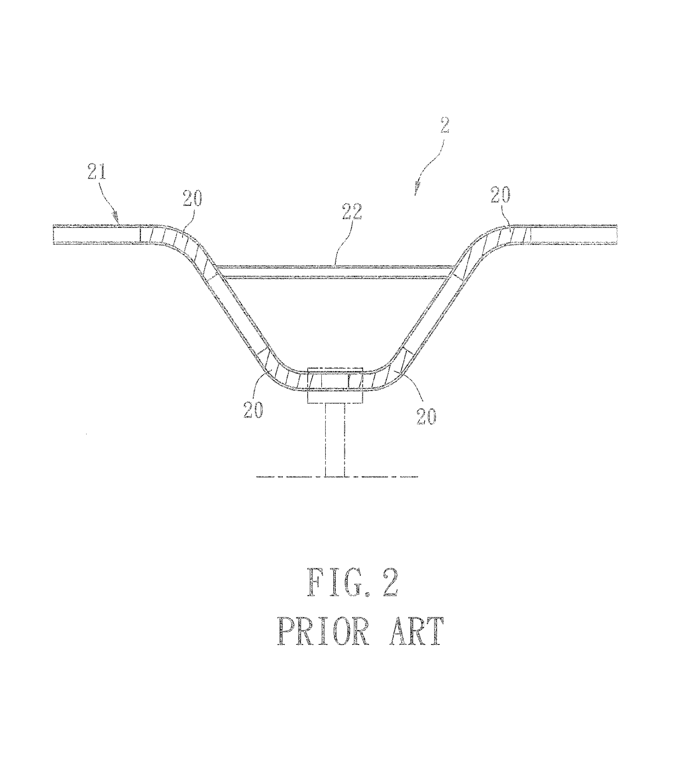

Fig. 2 shows another conventional motorcycle handle 2, which is reinforced by a plurality of spaced-apart reinforcing members 20 secured within a tubular handle body 21 of the handle 2 and a horizontal reinforcing tube 22 interconnecting two portions of the handle body 21.

However, high accuracy is required to dispose the horizontal tube 22. If the height of the reinforcing tube 22 is below that shown in Fig. 2, the reinforcing effect will be reduced. Or, if the height of the reinforcing tube 22 is above that shown in Fig. 2, the rider will be obstructed by the reinforcing tube 22 from seeing an instrument panel (not shown). Due to disposition of the reinforcing members 20 within the tubular handle body 21, the manufacturing steps and costs of the handle 2 are increased. Furthermore, occurrence of the reinforcing tube 22 affects adversely the outer appearance of the whole motorcycle. If the reinforcing tube 22 is coated with an outer housing (not shown), flexibility in the design of the outer housing will be reduced considerably.

The object, of this invention is to provide a motorcycle handle that can be reinforced effectively without any significant change in the design of a conventional motorcycle handle.

According to this invention, a motorcycle handle forms a part of a scooter type motorcycle. The motorcycle handle includes a handle body having a first connecting section, two first ascending sections extending respectively and upwardly from two opposite ends of the first connecting section, and two grip sections extending respectively and outwardly from top ends of the ascending sections away from each other. The motorcycle handle further includes: an outer housing, with which the handle body is coated; a reinforcing member having a shape corresponding to that of an assembly of the first connecting section and the first ascending sections, the reinforcing member being disposed on the handle body and between the outer housing and the handle body; and a plurality of connecting members interconnecting fixedly the handle body and the reinforcing member.

Since the shape of the reinforcing member corresponds to that of the assembly of the first connecting section and the first ascending sections, the reinforcing member can be disposed on the handle body without adverse influence on the appearance of the motorcycle handle.

These and other features and advantages of this invention will become apparent in the following detailed description of 3 preferred embodiment of this invention, with reference to the accompanying drawings, in which:
Fig. 1 is a sectional view of a conventional motorcycle handle;
Fig. 2 is a sectional view of another conventional motorcycle handle;
Fig. 3 is a perspective view of the preferred embodiment of a motorcycle handle according to this invention;
Fig. 4 is a front view of the preferred embodiment, an outer housing being removed for convenience of illustration;

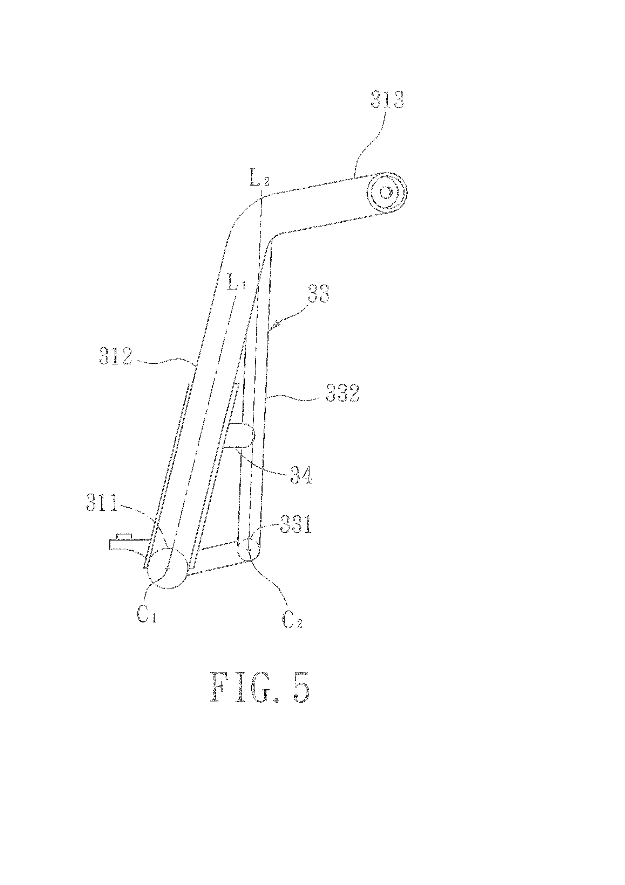

Fig. 5 is a side view of the preferred embodiment, the outer housing being removed for convenience of illustration;
Fig. 6 is a fragmentary schematic side view of a motorcycle including the preferred embodiment, illustrating a rider's sight line for viewing an instrument panel of the motorcycle; and
Fig. 7 is a fragmentary rear view of the motorcycle, illustrating arrangement of the motorcycle handle and the instrument panel.

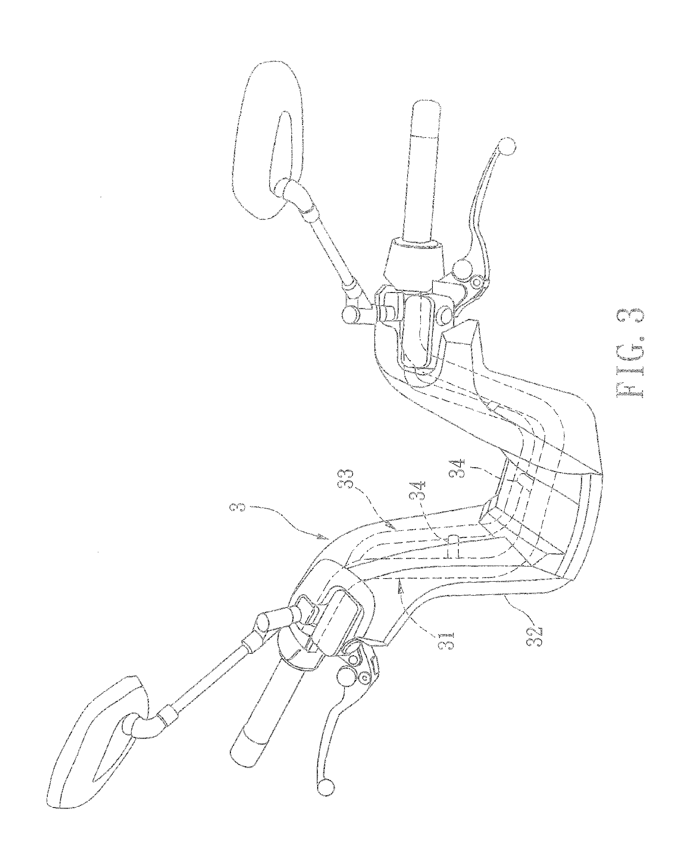

Referring to Fig. 3, the preferred embodiment of a motorcycle handle 3 according to this invention includes an outer housing 32, a handle body 31 coated with the outer housing 32, a reinforcing member 33 disposed fixedly on the handle body 31 and located between the outer housing 32 and the handle body 31, and a plurality of connecting members 34 for connecting the handle body 31 fixedly to the reinforcing member 33.

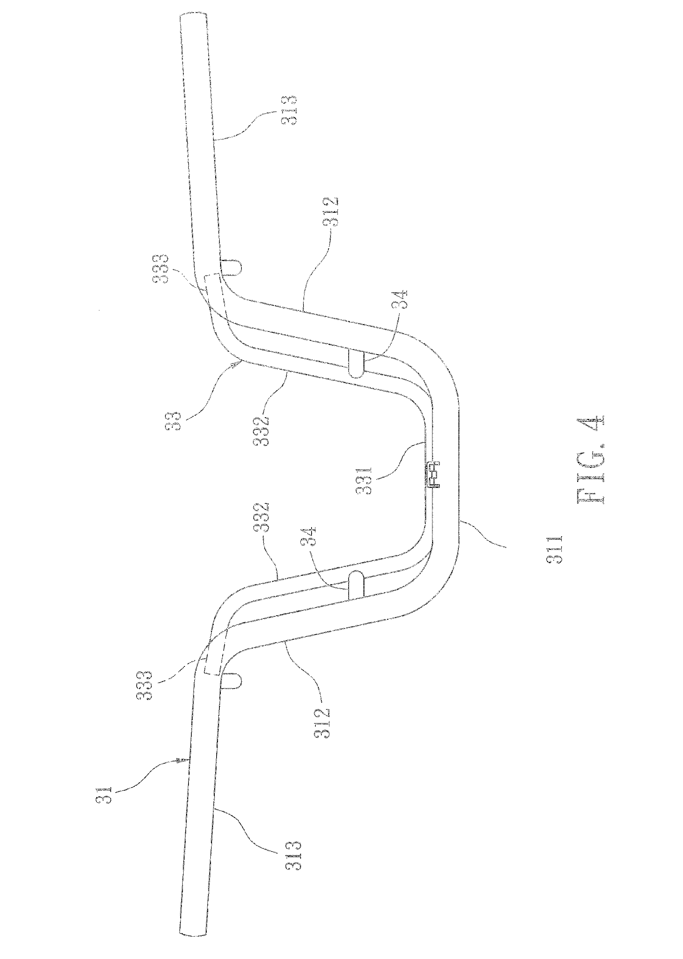

With further reference to Fig. 4, the handle body 31 includes a horizontal first connecting section 311 extending along a left-to-right direction, two first ascending sections 312 extending respectively and upwardly from two opposite ends of the first connecting section 311, and two grip sections 313 extending respectively and outwardly from top ends of the first ascending sections 312 away from each other. The reinforcing member 33 has a shape corresponding to that of an assembly of the first connecting section 311 and the first ascending sections 312, and is disposed fixedly on the handle body 31. The first connecting section 311 is disposed fixedly on a steering stem (not shown) that is disposed pivotally within a head tube (not shown). Since the steering stem and the head tube are known in the art, further description thereof will be omitted herein.

The reinforcing member 33 includes a horizontal second connecting section 331 extending along the left-to-right direction and aligned with the first connecting section 311 along a front-to-rear direction, two second ascending sections 332 extending respectively and upwardly from two opposite ends of the second connecting section 331, and two fixing sections 333 disposed respectively on the second ascending sections 332 and connected fixedly to the handle body 31. In this embodiment, the fixing sections 333 extend respectively and outwardly from top ends of the second ascending sections 332 away from each other, and are connected respectively and fixedly to the grip sections 313.

The first ascending section 312 of the handle body 31 is misaligned from the second ascending section 332 of the reinforcing member 33 along the front-to-rear direction. In this embodiment, the second ascending sections 332 are disposed between the first ascending sections 312 along the left-to-right direction. Alternatively, the first ascending sections 312 may be disposed between the second ascending sections 332. In either case, the rigidity of the motorcycle handle 3 along the left-to-right direction can be enhanced.

Alternatively, the fixing sections 333 of the reinforcing member 33 may be connected respectively and fixedly to the first ascending sections 312 of the handle body 31.

The first connecting section 311 has a central axis (C1) that is misaligned from a central axis (C2) of the second connecting section 331 along the left-to-right direction. Central axes (L1) of the first ascending sections 312 are misaligned from central axes (L2) of the second ascending section 332 along the left-to-right direction. In this embodiment, the second connecting section 331 has a top side that is disposed above that of the first connecting section 311, and the central axis (C2) of the second connecting section 331 is disposed behind and spaced apart from the central axis (C1) of the first connecting section 311. As such, the rigidity of the motorcycle handle 3 in the front-to-rear direction can be enhanced.

In this embodiment, each of an assembly of the first connecting section 311 and the first ascending sections 312 and an assembly of the second connecting section 331 and the second ascending sections 332 is U-shaped. In an alternative arrangement, each of the assembly of the first connecting section 311 and the first ascending sections 312 and the assembly of the second connecting section 331 and the second ascending sections 332 is V-shaped.

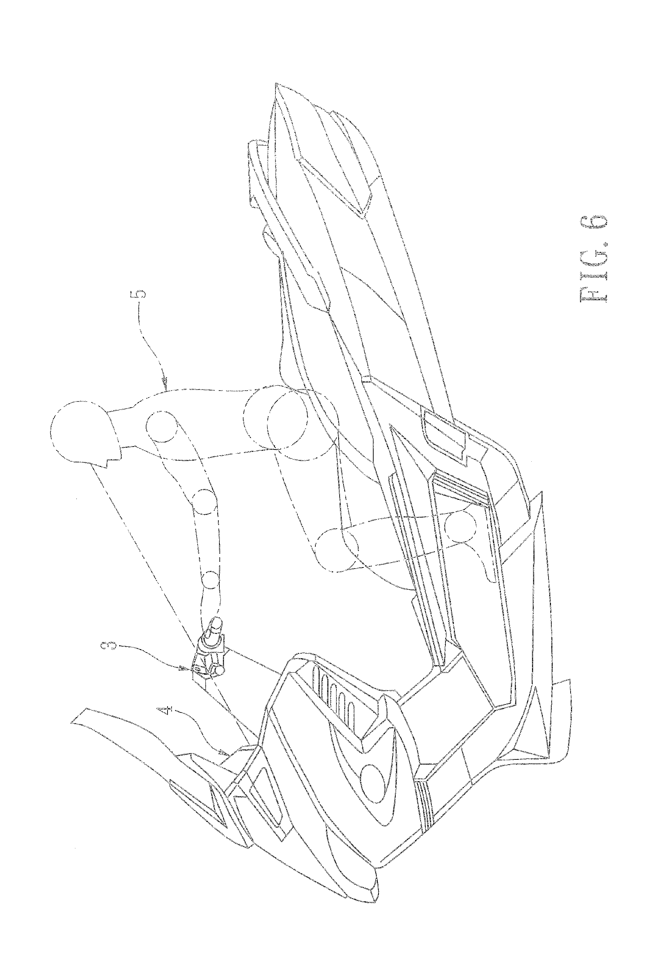

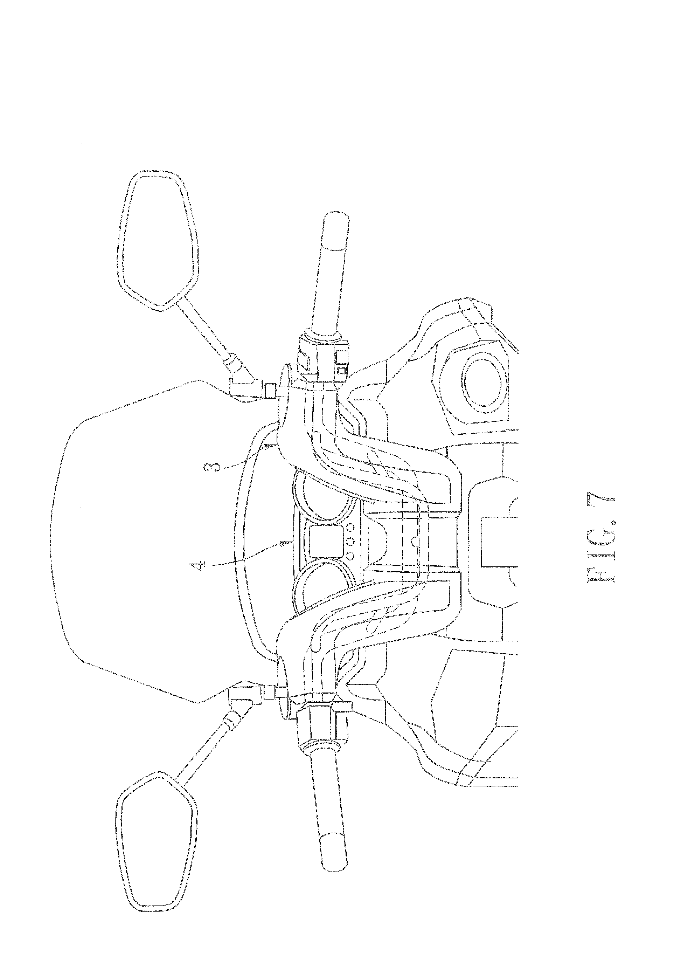

With further reference to Figs. 6 and 7, since the shape of the reinforcing member 33 corresponds to that of the handle body 31 and disposed between the outer housing 32 and the handle body 31, the rigidity of the motorcycle handle 3 can be promoted effectively without changing the profile of the outer housing 32, and the sight line of the rider 5 cannot be obstructed by the motorcycle handle 3 from viewing an instrument panel 4 clearly, thereby ensuring a good controllability of the motorcycle.

## Claims

1. A motorcycle handle (3) for a scooter type motorcycle, the motorcycle handle (3) including a handle body (31) having a first connecting section (311), two first ascending sections (312) extending respectively and upwardly from two opposite ends of the first connecting section (311), and two grip sections (313) extending respectively and outwardly from top ends of the ascending sections (312) away from each other, **characterized by**:
an outer housing (32), with which the handle body (31) is coated;
a reinforcing member (33) having a shape corresponding to that of an assembly of the first connecting section (311) and the first ascending sections (312), the reinforcing member (33) being disposed on the handle body (31) and located between the outer housing (32) and the handle body (31); and
a plurality of connecting members (34) for connecting the handle body (31) fixedly to the reinforcing member (33).

2. The motorcycle handle as claimed in Claim 1, **characterized in that** the reinforcing member (33) has a second connecting section (331) aligned with the first connecting section (311) along a front-to-rear direction, two second ascending sections (332) extending respectively and upwardly from two opposite ends of the second connecting section (331), and two fixing sections (333) disposed respectively and fixedly on the second ascending sections (332) and connected fixedly to the handle body (31).

3. The motorcycle handle as claimed Claim 2, wherein the fixing sections (333) of the reinforcing member (33) extend respectively and outwardly from top ends of the second ascending sections (332), and are connected respectively and fixedly to the grip sections (313) of the handle body (31).

4. The motorcycle handle as claimed in Claim 2, wherein the first ascending sections (312) of the handle body (31) are misaligned respectively from the second ascending sections (332) of the reinforcing member (33) along the front-to-rear direction.

5. The motorcycle handle as claimed in Claim 4, wherein the second ascending sections (332) of the reinforcing member (33) are disposed between the first ascending sections (312) of the handle body (31) along a left-to-right direction.

6. The motorcycle handle as claimed in Claim 2, wherein each of the first and second connecting sections (311, 331) is horizontal, extends along a left-to-right direction, and has a central axis (C1, C2), the central axis (C1) of the first connecting section (311) being misaligned from the central axis (C2) of the second connecting section (331) along the left-to-right direction, central axes (L1) of the first ascending sections (312) being misaligned from central axes (L2) of the second ascending sections (332) along the left-to-right direction.

7. The motorcycle handle as claimed in Claim 6, wherein one of the first and second connecting sections (311, 331) has a top side disposed above that of the other one of the first and second connecting sections (311, 331).

8. The motorcycle handle as claimed in Claim 7, wherein one of the central axes (C1, C2) of the first and second connecting sections (311, 331) is disposed behind and spaced apart from the other one of the central axes (C1, C2) of the first and second connecting sections (311, 331).
